# DEMANDE DE BREVET EUROPEEN

(11) **EP 1 073 215 A1**
(43) Date de publication de la demande: **31.01.2001**
(21) Numéro de dépôt: 00202641.7
(22) Date de dépôt: 21.07.2000
(51) Int. Cl.: H04B 7/26, H04Q 7/32

(54) **Appareil téléphonique, système de télécommunication et procédé de synchronisation d'un appareil téléphonique sur une station de base**

(30) Priorité: 30.07.1999 FR 9909927
(71) Demandeur: Koninklijke Philips Electronics N.V., 5621 BA Eindhoven (NL)
(72) Inventeur: Pichard, Yann, Société Civile S.P.I.D., 75008 Paris (FR)
(74) Mandataire: de la Fouchardière, Marie-Noelle

(57) **Abrégé**

L'invention permet de réduire la durée nécessaire à la synchronisation d'un récepteur radio sur une station de base d'un système de télécommunication cellulaire dans le cas d'une réinitialisation déclenchée suite à une détection d'erreur matérielle ou logicielle. Pour cela, il est prévu notamment un appareil téléphonique comportant des moyens de sauvegarde pour sauvegarder en mémoire la fréquence de la cellule courante sur laquelle le mobile est synchronisé, pour que lors d'une réinitialisation déclenchée par une détection d'erreur, le mobile puisse se synchroniser directement sur la fréquence mémorisée sans effectuer les mesures de puissance habituelles.
Application : téléphonie mobile.

## Description

L'invention concerne un appareil téléphonique ainsi qu'un système de télécommunication comportant au moins une station d'émission destinée à émettre sur une fréquence prédéterminée à destination d'au moins l'appareil téléphonique, ledit appareil comportant :
- des moyens de réception pour recevoir des fréquences radioélectriques émises par différents systèmes de télécommunication dont au moins un système est dit autorisé,
- des moyens de recherche et de synchronisation pour rechercher, parmi les fréquences reçues, une fréquence, dite fréquence de synchronisation, appartenant à un système autorisé et pour se synchroniser sur ladite fréquence de synchronisation.

Elle concerne également un procédé de synchronisation d'un appareil téléphonique sur des fréquences radio reçues, émises par des stations d'émission de différents systèmes de télécommunication dont au moins un système est dit autorisé, comportant :
- une étape de recherche d'une fréquence, dite fréquence de synchronisation, appartenant à un système autorisé parmi les fréquences reçues et
- une étape de synchronisation sur ladite fréquence de synchronisation.

Elle a de nombreuses applications notamment dans les systèmes de téléphonie mobile et permet d'accélérer la réinitialisation du téléphone suite à une erreur matérielle ou logicielle.

Les parties logicielles et matérielles des téléphones mobiles cellulaires sont susceptibles de générer des erreurs occasionnelles d'origines variées nécessitant de réinitialiser tous les programmes de fonctionnement de l'appareil. Cette réinitialisation engendre la perte de la connexion au réseau et implique une nouvelle synchronisation du mobile par rapport au réseau. La norme GSM prévoit en effet une initialisation complète de tous les programmes de fonctionnement lors du démarrage de l'appareil, comprenant une étape de recherche des réseaux disponibles, une étape de sélection d'un réseau autorisé parmi les réseaux disponibles et une étape de synchronisation du mobile sur les fréquences du réseau sélectionné. Le brevet américain numéro 5, 818,885 décrit une méthode pour accélérer l'étape de synchronisation proprement dite lors du démarrage initial de l'appareil.

L'invention propose une solution plus simple à mettre en oeuvre et moins coûteuse que celle décrite dans le document cité pour réduire la durée nécessaire à la réinitialisation d'un récepteur radio sur un émetteur dans le cas particulier d'une réinitialisation déclenchée par une détection d'erreur d'origine matérielle ou logicielle. Pour cela, il est prévu un appareil téléphonique et un système tels que décrits dans le paragraphe introductif, remarquables en ce que l'appareil comporte des moyens de sauvegarde pour sauvegarder la fréquence de synchronisation et des moyens de détection d'erreur couplés à des moyens de récupération pour récupérer la fréquence de synchronisation sauvegardée, lors d'une détection d'erreur. Lorsqu'une erreur détectée dans un programme nécessite en effet de réinitialiser l'appareil en causant la perte du réseau, la probabilité pour que la meilleure fréquence reçue après la détection d'erreur soit la même que celle sur laquelle le mobile était synchronisé avant la détection d'erreur est très grande. C'est pourquoi l'invention préconise de sauvegarder cette fréquence en mémoire pour pouvoir la réutiliser lors de la prochaine re-synchronisation sur le réseau.

Selon une caractéristique de l'invention, les moyens de détection d'erreur sont susceptibles de fournir une indication d'erreur aux moyens de recherche et de synchronisation pour déclencher une synchronisation directement sur la fréquence sauvegardée. L'indication d'erreur permet en effet aux moyens de recherche et de synchronisation de différencier une synchronisation exigée dans le cas d'un démarrage normal tel que prévu par la norme qui nécessite de procéder à des mesures de puissance pour rechercher la meilleure fréquence de synchronisation et une re-synchronisation suite à une erreur d'origine logicielle ou matérielle qui, selon l'invention, ne nécessite pas de procéder à nouveau à de telles mesures.

L'invention sera mieux comprise à l'aide de la description suivante faite à titre d'exemple non limitatif en regard des dessins ci-annexés dans lesquels :
- la figure 1 illustre un exemple de procédé de synchronisation selon l'invention,
- la figure 2 est un exemple de schéma de principe pour illustrer le fonctionnement d'un d'appareil téléphonique selon l'invention et
- la figure 3 représente un exemple de système de télécommunication selon l'invention.

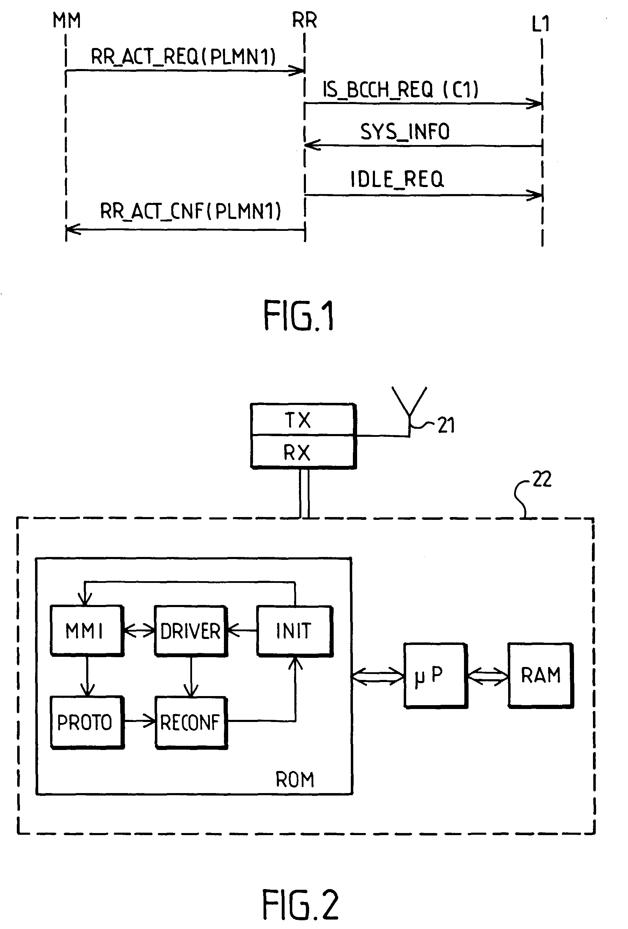

La figure 1 illustre un exemple de procédé de synchronisation selon l'invention entre un téléphone mobile et une station d'émission ou station de base d'un système de téléphonie cellulaire. Ce procédé s'applique en particulier à un système de type GSM conforme à la recommandation 3.22 paragraphes 3.1, 3.2 et 4.4 et à la recommandation 5.08 paragraphe 6. Dans cet exemple, un mobile M1 se trouve dans la zone de couverture de 6 stations de base recouvrant les cellules C1 à C6. Pour se synchroniser sur une station de base selon les recommandations citées, le mobile doit d'abord procéder à une recherche d'une fréquence accessible ayant un niveau de puissance de réception suffisant et appartenant à un système autorisé parmi toutes les fréquences reçues, avant de se synchroniser sur cette fréquence. Le système autorisé peut être par exemple celui du réseau, dit réseau principal, auquel le mobile M1 a souscrit un abonnement ou tout autre système auquel il a accès. Par hypothèse, la cellule C6 est dite la plus proche car la fréquence émise par sa station de base est reçue avec la plus forte puissance mais elle appartient à un réseau qui n'est pas un réseau autorisé. En revanche, la cellule C1 appartient à un réseau autorisé et est la plus proche après la cellule C6. Le mobile va donc tenter de se synchroniser d'abord sur la cellule C6 puis sur la cellule C1. Pour cela, il comporte plusieurs parties ou couches de protocole qui coopèrent entre elles pour réaliser la synchronisation sur une cellule donnée: une couche MM qui gère la mobilité de l'appareil, une couche RR qui gère les ressources radio et une couche L1 qui représentant la couche physique.

Dans le cas d'un démarrage normal tel que prévu par la norme GSM, la couche MM fait une demande de synchronisation sur un réseau donné en indiquant qu'il s'agit d'un démarrage normal. La couche RR fait alors une requête à la couche physique L1 pour obtenir des mesures de puissance des fréquences reçues. Cette étape de mesure dure environ une dizaine de secondes. La couche physique L1 renvoie alors les informations de puissance demandées en classant par exemple les fréquences par ordre de puissance décroissante. La couche RR émet ensuite une requête de synchronisation à la couche physique L1 pour se synchroniser sur la fréquence qui a la puissance de réception la plus forte. Celle-ci renvoie les informations demandées à la couche RR après décodage des informations disponibles sur cette fréquence,. La couche RR analyse ces informations et en déduit éventuellement un échec de synchronisation si cette fréquence n'appartient pas à un système autorisé. La couche RR fait alors une demande de synchronisation sur la fréquence suivante par ordre de puissance décroissante et ainsi de suite, jusqu'à trouver une fréquence appartenant à un système autorisé. Dès que la couche RR est informée par la couche physique qu'une synchronisation est possible sur la fréquence demandée, la couche RR fait alors une requête pour se placer en position de recevoir des appels sur la fréquence acceptée et informe la couche MM que le mobile est synchronisé. Au total, la procédure aura duré une quinzaine de secondes environ.

La figure 1 illustre un exemple de procédé d'échange de messages entre les différentes couches normalisées du mobile M1 dans le cas d'un démarrage suite à une erreur logicielle ou matérielle conformément à l'invention. Les données correspondant à la fréquence de synchronisation courante sont sauvegardées et mises à jour en permanence. Le procédé débute par une détection d'erreur au niveau de n'importe quel programme de fonctionnement pour déclencher la réinitialisation de l'appareil. Cette détection déclenche une étape de récupération pour récupérer les informations sauvegardées relatives à la fréquence de la cellule courante sur laquelle le mobile était synchronisé avant la détection d'erreur. C'est ensuite la couche MM qui va déclencher la phase de re-synchronisation suite à l'erreur détectée. Pour cela, la couche MM fait une demande de synchronisation sur un réseau donné PLMN1 : RR_ACT_REQ (PLMN1) en indiquant qu'il s'agit d'un démarrage suite à une détection d'erreur. La couche RR envoie alors directement à la couche physique L1, une requête de synchronisation sur la fréquence de la cellule C1 mémorisée : IS_BCCH_REQ(C1) sans procéder aux mesures de puissances habituelles et de recherche d'une cellule autorisée. Dès que la couche physique L1 renvoie les informations SYS_INFO nécessaires à la détermination de l'appartenance au réseau PLMN1 demandé, la couche RR émet alors une requête IDLE_REQ (C1) pour se placer en position de recevoir des appels sur la cellule C1 choisie et informe la couche MM que le mobile est synchronisé sur la cellule C1 : RR_ACT_CNF (PLMN1). La procédure de synchronisation a duré environ 3 secondes.

Le schéma de la figure 2 détaille un exemple de structure d'un appareil téléphonique selon l'invention pour réaliser le procédé décrit à la figure 1. Il comprend un circuit d'émission / réception TX / RX couplé à une antenne 21 pour recevoir et synchroniser le téléphone sur des fréquences radio émises par des stations de base de différents systèmes de radio téléphonie en vue d'échanger des messages avec un réseau donné. Les opérations du radio téléphone sont contrôlées par un organe de contrôle 22 doté d'un microprocesseur µP, d'une mémoire volatile RAM et d'une mémoire morte ROM contenant les programmes de fonctionnement de l'appareil exécutés par le microprocesseur. La mémoire ROM comporte :
- un module RECONF de gestion des erreurs,
- un module INIT d'initialisation pour déclencher l'initialisation de l'appareil,
- un module DRIVER de pilotage des périphériques (carte SIM, clavier, écran LCD, etc.)
- un module PROTO de gestion des protocoles de communication avec les stations de base qui comprend les couches de protocole MM, RR et L1 et
- une interface MMI coopérant avec les modules DRIVER et PROTO.

Une erreur d'origine logicielle peut être détectée par n'importe quel programme stocké en ROM et en particulier les modules MMI, DRIVER et PROTO. Certains modules, comme le module DRIVER, pilotent des composants matériels qui sont également susceptibles de générer des erreurs. Chaque module gère et teste les données qu'il reçoit pour déclencher une réinitialisation de l'appareil en cas de détection d'erreur, via le module RECONF qui centralise les détections d'erreur et le module INIT qui déclenche le redémarrage des programmes. Lorsque le module RECONF est informé d'une détection d'erreur ainsi que de l'origine de l'erreur détectée, il fait une demande de réinitialisation de tous les programmes au module INIT. Les données concernant la fréquence de synchronisation sur laquelle le mobile est synchronisé sont fournies par la couche de gestion des ressources RR du module PROTO et sont systématiquement mises à jour dans la mémoire RAM. Ces données sauvegardées sont alors récupérées par le module INIT suite à la demande de réinitialisation du module RECONF, pour faire une demande de redémarrage aux modules MMI, DRIVER et PROTO en leur indiquant qu'il s'agit d'un redémarrage suite à une erreur (par opposition à un démarrage normal ou initial tel que prescrit par la norme GSM). Le module de protocole PROTO exécute, entre autres, le procédé décrit à la figure 1 pour récupérer la fréquence de synchronisation sauvegardée.

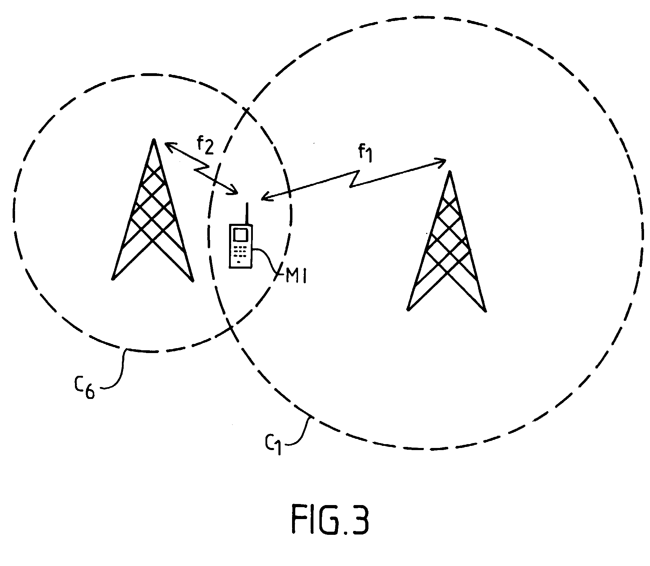

La figure 3 illustre un exemple de système selon l'invention fonctionnant avec un appareil téléphonique du type de celui schématisé à la figure 2. Il s'agit d'un système de téléphonie cellulaire, de type GSM par exemple, comportant des stations d'émission ou stations de base destinées à émettre des messages radioélectriques à destination de téléphones mobiles sur une fréquence prédéterminée couvrant une zone géographique donnée appelée cellule. Pour des raisons de clarté, deux cellules seulement, les cellules C1 et C6 décrites en relation avec la figure 1, ainsi qu'un seul appareil téléphonique M1 sont représentés sur la figure 3. La cellule C6 dont la fréquence est notée f6 est la plus proche mais n'appartient pas à un système autorisé pour le téléphone mobile M1. Seul le système possédant la cellule C1 dont la fréquence est notée f1 est autorisé. Le mobile M1 est donc synchronisé sur la cellule C1 lorsqu'une erreur d'origine logicielle ou matérielle nécessitant de réinitialiser l'appareil est détectée notamment par l'un des modules MMI, DRIVER ou PROTO décrits à la figure 2. Le procédé décrit à la figure 1 est alors déclenché pour re-synchroniser directement le mobile sur la cellule C1 sans effectuer les mesures de puissance habituelles.

Ainsi ont été décrits et illustrés à l'aide d'exemples un appareil téléphonique, un système et un procédé de synchronisation pour permettre à un radio téléphone de se synchroniser rapidement sur une station de base après une détection d'erreur logicielle ou matérielle. Bien entendu, de nombreuses variantes pourront être apportées aux modes de réalisation décrits sans sortir du cadre de l'invention.

## Revendications

1. Appareil téléphonique comportant :
- des moyens de réception pour recevoir des fréquences radioélectriques émises par différents systèmes de télécommunication dont au moins un système est dit autorisé,
- des moyens de recherche et de synchronisation pour rechercher, parmi les fréquences reçues, une fréquence, dite fréquence de synchronisation, appartenant à un système autorisé et pour se synchroniser sur ladite fréquence de synchronisation,
**caractérisé en ce qu'**il comporte des moyens de sauvegarde pour sauvegarder ladite fréquence de synchronisation et des moyens de détection d'erreur couplés à des moyens de récupération pour récupérer ladite fréquence de synchronisation sauvegardée, lors d'une détection d'erreur, en vue d'accélérer la prochaine synchronisation par les moyens de recherche et de synchronisation sur la fréquence de synchronisation sauvegardée.

2. Appareil selon la revendication 1, caractérisé en ce que les moyens de détection d'erreur sont susceptibles de fournir une indication d'erreur aux moyens de recherche et de synchronisation pour déclencher une synchronisation directement sur la fréquence sauvegardée.

3. Système de télécommunication comportant au moins une station d'émission destinée à émettre sur une fréquence radio prédéterminée à destination d'au moins un appareil téléphonique comportant :
- des moyens de réception pour recevoir des fréquences radioélectriques émises par différents systèmes de télécommunication dont au moins un système est dit autorisé,
- des moyens de recherche et de synchronisation pour rechercher, parmi les fréquences reçues, une fréquence, dite fréquence de synchronisation, appartenant à un système autorisé et pour se synchroniser sur ladite fréquence de synchronisation,
**caractérisé en ce que** l'appareil comporte des moyens de sauvegarde pour sauvegarder ladite fréquence de synchronisation et des moyens de détection d'erreur couplés à des moyens de récupération pour récupérer ladite fréquence de synchronisation sauvegardée, lors d'une détection d'erreur.

4. Procédé de synchronisation d'un appareil téléphonique sur des fréquences radio reçues, émises par différents systèmes de télécommunication dont au moins un système est dit autorisé, comportant :
- une étape de recherche d'une fréquence, parmi les fréquences reçues, dite fréquence de synchronisation, appartenant à un système autorisé et
- une étape de synchronisation sur ladite fréquence de synchronisation,
**caractérisé en ce qu'** il comporte une étape de sauvegarde pour sauvegarder ladite fréquence de synchronisation, une étape de détection d'erreur et une étape de récupération pour récupérer ladite fréquence de synchronisation sauvegardée, lors d'une détection d'erreur, de façon à accélérer la re-synchronisation ultérieure de l'appareil directement sur la fréquence de synchronisation sauvegardée dans réitérer l'étape de recherche d'une fréquence de synchronisation.
